# EUROPEAN PATENT SPECIFICATION

(11) **EP 0 247 489 B1**
(45) Date of publication and mention of the grant of the patent: **25.08.1993**
(21) Application number: 87107185.8
(22) Date of filing: 18.05.1987
(51) Int. Cl.: D06M 15/277

(54) **Fluorine containing water and oil repellent composition**
Fluor enthaltende, Wasser und Ölabweisende Zubereitung
Composition répulsive à l'eau et à l'huile contenant du fluor

(30) Priority: 28.05.1986 JP 122920/86; 06.10.1986 JP 238535/86
(43) Date of publication of application: 02.12.1987
(73) Proprietor: DAIKIN INDUSTRIES, LIMITED, Osaka-shi, Osaka-fu 530 (JP)
(72) Inventor: Ohmori, Akira, Ibaraki-shi Osaka-fu (JP); Inukai, Hiroshi, Settsu-shi Osaka-fu (JP)
(74) Representative: Schüler, Horst, Dr.

(56) References cited:
- EP-A- 0 124 236
- FR-A- 2 148 432
- GB-A- 1 318 491
- GB-A- 1 454 906
- US-A- 3 544 537

## Description

The present invention relates to fluorine-containing water- and oil-repellent compositions which exhibit good adhesion to the articles to be treated.

It is known that fluorine-containing polymers, such as some fluoroalkyl methacrylate polymers, are usable as water- and oil-repellent agents (see, for example, Examined Japanese Patent Publication SHO 47-40467). However, the known polymers having water- and oil-repellent properties have poor compatibility with the article to be treated and further have the problem that the coating of the polymer readily peels when lightly rubbed because of low adhesive strength.

In GB-A-1454906 there are described water-and oil-repellent compositions comprising a copolymer of at least two vinyl monomers one of which monomers contains a fluorocarbon chain and the other monomer contains an acid group.

In the α-position the monomers have hydrogen or a methyl group. These polymers have low intrinsic viscosity and low adhesive strength.

Starting from this state of the art, the main object of the present invention is to provide a fluorine-containing water- and oil-repellent composition for giving uniform tough coatings exhibiting high adhesion to the article to be treated.

Other objects and features of the invention will become apparent from the following description.

The present invention provides a fluorine-containing water- and oil-repellent composition (hereinafter referred to as Composition A) comprising a fluorine-containing polymer which comprises at least 10 mole % of a fluorine-containing acrylate represented by the formula: 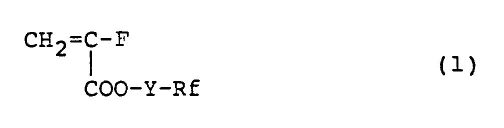
wherein Y is alkylene having 1 to 3 carbon atoms, -CH₂CH₂N(R)SO₂- group (wherein R is alkyl having 1 to 4 cabron atoms) or -CH₂CH(OZ)CH₂- (wherein Z is a hydrogen atom or acetyl), and Rf is fluoroalkyl having 3 to 21 carbon atoms, or fluoroalkyl having 3 to 21 carbon atoms and 1 to 10 oxygen atoms in its carbon chain (wherein no two oxygen atoms are present adjacent to each other).

This invention further provides a fluorine-containing water- and oil-repellent composition (hereinafter referred to as Composition B) comprising a fluorine-containing polymer which comprises
(i) 10 to 90 mole % of a monomer represented by the formula: 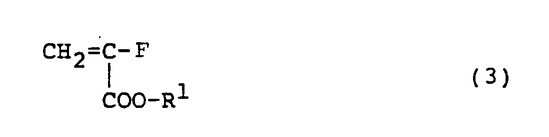 wherein and R¹ is alkyl having 1 to 20 carbon atoms, alicyclic group, aromatic group or aralkyl;
(ii) 10 to 80 mole % of a monomer represented by the formula: 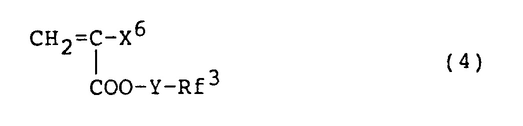 wherein X⁶ is a hydrogen atom or methyl, Y is alkylene having 1 to 3 carbon atoms, -CH₂CH₂N(R)SO₂- group (wherein R is alkyl having 1 to 4 carbon atoms) or -CH₂CH(OZ)CH₂- (wherein Z is a hydrogen atom or acetyl), and Rf³ is fluoroalkyl having 3 to 21 carbon atoms or fluoroalkyl having 3 to 21 carbon atoms and 1 to 10 oxygen atoms in its carbon chain (wherein no two oxygen atoms are present adjacent to each other); and
(iii) 0 to 50 mole % of other copolymerizable ethylenically unsaturated monomer,
the combined amount of the monomers (i) to (iii) being 100 mole %.

We prepared various fluorine-containing acrylate polymers and checked the polymers for adhesion to articles, consequently finding that polymers containing a specific acrylate has outstanding properties for use as a water- and oil-repellent agent. The present invention has been accomplished based on this novel finding.

The Rf group in the fluorine-containing acrylate (1) to be used in Composition A of the invention preferably contains a number of fluorine atoms at least twice the number of carbon atoms contained therein. More preferred examples of such Rf groups are those represented by the formula:

-((CF₂CF₂)ₘ(O)ₙ)_{q}CF(Rf¹)CF₃

wherein m is an integer of from 1 to 5, n is 0 or 1, q is an integer of from 1 to 5, and Rf¹ is a fluorine atom or trifluoromethyl, those represented by the formula 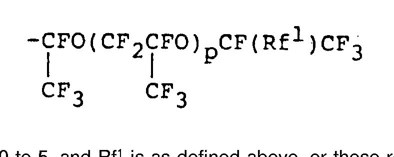
wherein p is an integer of from 0 to 5, and Rf¹ is as defined above, or those represented by the formula:

-Ph-Rf²

wherein Ph is phenylene, and Rf² is perfluoroalkyl having 5 to 15 carbon atoms.

More specific examples of monomers (1) are CH₂=CF-COOCH₂CH₂C₇F₁₅, CH₂=CF-COOCH₂C₂F₅, CH₂=CF-COOCH₂C₈F₁₆CF(CF₃)₂, CH₂=CF-COOCH₂-CF(CF₃)OCF₂-CF(CF₃)OC₃F₇, CH₂=CF-COOCH₂-CF(CF₃)OC₃F₇, CH₂=CF-COOCH₂CH₂-N(CH₃)SO₂C₈F₁₇, CH₂=CF-COOCH₂CH(OH)CH₂C₉F₁₉ and the like.

Examples of monomers, other than the fluorine-containing acrylate (1), which can be incorporated into the fluorine-containing polymer used in Composition A are monomers represented by the formula: 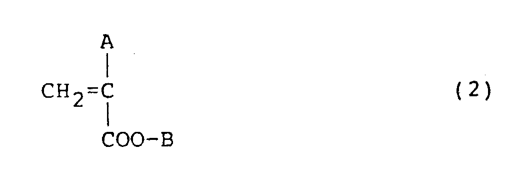
wherein A is a hydrogen atom, chlorine atom or methyl and B is alkyl having 1 to 10 carbon atoms, fluoroalkyl having 1 to 10 carbon atoms, or alicyclic group having 6 to 8 carbon atoms. Also useful are other ethylenically unsaturated monomers including ethylene, propylene, styrene, and acrylates and methacrylates which have a functional group such as vinyl, hydroxyl, carboxyl, glycidyl, dialkylamino or trialkoxysilyl.

Examples of acrylates or methacrylates having a functional group are CH₂=C(CH₃)COO(CH₂CH₂O)₁₀COC(CH₃)=CH₂, CH₂=C(CH₃)COO(CH₂)₁₀COC(CH₃)=CH₂, CH₂=C(CH₃)COOCH₂CH-(OCOC(CH₃)=CH₂)CH₂OCOC(CH₃)=CH₂, CH₂=CHCOOCH₂CH₂OH, CH₂=CHCOO-R^{A} (wherein R^{A} is glycidyl), CH₂=C(CH₃)COOCH₂CH₂CH₂Si(OCH₃)₃, etc.

More specific examples of monomers (2) are CH₂=CHCOOCH₃, CH₂=CHCOOC₁₂H₂₅, CH₂=CHCOO-R^{B} (wherein R^{B} is cyclohexyl), CH₂=C(CH₃)COOCH₃, CH₂=C(CH₃)COOC₈H₃₇, CH₂=C(CH₃)COOCH₂CH₂C₇F₁₅, CH₂=C(Cl)COOCH₃, etc.

The fluorine-containing polymer to be used for Composition A is usually in the range of from 10,000 kmol/kg to 4,000,000 kmol/kg in number average molecular weight (as measured by gel permeation chromatography) and in the range of from 0.25 to 2.0, in intrinsic viscosity [η] (as measured at a temperature of 35°C using m-xylene hexafluoride, methyl ethyl ketone, chloroform, 1,1,1-trichloromethane or like solvent). If the molecular weight is too small, the resulting coating has low strength and is liable to peel off the article treated, whereas if it is too great, the resulting composition is difficult to apply to articles owing to increased viscosity or low free-flowing properties.

The fluorine-containing polymer used in Composition A and comprising 10 to 90 mole % of a fluorine-containing acrylate (1) exhibits high adhesion to the article to be treated, forming a tough and flexible coating.

The monomers represented by the formula (2) and inexpensive monomers, such as ethylene, propylene and styrene, are useful for reducing the cost of the fluorine-containing polymer and act to impart hardness to the fluorine-containing polymer. The monomers of the formula (2) and other monomers, such as ethylene, propylene and styrene, are used usually in an amount of up to 90 mole %.

The fluorine-containing polymer, when containing a functional group, exhibits improved adhesion to the article to be treated. Further the functional group can be utilized for crosslinking the fluorine-containing polymer. For the crosslinking, methods which are usually used in the art can be resorted to (see, for example, JP-A-7242880). Usually up to 30 mole % of acrylate or methacrylate is used which has the functional group to be introduced into the fluorine-containing polymer.

Composition B comprising a fluorine-containing polymer which comprises 10 to 90 mole % of monomer represented by the formula (3), 10 to 80 mole % of monomer represented by the formula (4) and 0 to 50 mole % of other copolymerizable ethylenically unsaturated monomer also exhibits excellent water- and oil-repellent propoerties.

Examples of groups R¹ in the formula (3), which are not limited specifically, are alkyl groups such as methyl, ethyl, butyl and stearyl; halogenated (but not fluorinated) alkyl groups such as 2-chloroethyl; cycloalkyl groups such as cyclohexyl, bornyl and adamantyl; aromatic groups such as phenyl and naphthyl; silicon-containing groups such as trimethylsilyl and trimethylsilylpropyl; phosphorus-containing groups such as dimethylphosphateethyl; groups having an unsaturated bond such as allyl; groups having a functional group, such as cyanoethyl and glycidyl; groups having dialkylamino such as dimethylaminoethyl; groups having an ether group such as tetrahydrofurfuryl; etc.

More specific examples of monomers (3) are CH₂=CFCOOCH₃, CH₂-CFCOOC₂H₅, CH₂=CFCOOC₃H₇, CH₂=CFCOOC₄H₉, CH₂=CFCOOCH(CH₃)₂, CH₂=CFCOOC₁₂H₂₅, CH₂=CFCOOC₁₆H₃₇, 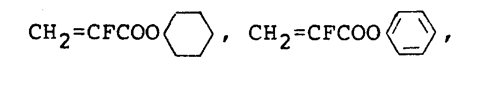 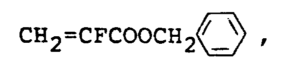
CH₂=CFCOOCH₂CH₂OP(=O)(OCH₃)₂, CH₂=CClCOOCH₂CH₂CN, CH₂=CFCOOCH₂CH=CH₂, etc.

The Rf³ group in the fluorine-containing acrylate (4) to be used in Composition B in the invention preferably contains a number of fluorine atoms at least twice the number of carbon atoms contained therein. More preferred examples of such Rf³ groups are those represented by the formula:

-((CF₂CF₂)ₘ(O)ₙ)qCF(Rf⁴)CF₃

wherein m is an integer of from 1 to 5, n is 0 or 1, q is an integer of from 1 to 5, and Rf⁴ is a fluorine atom or trifluoromethyl, those represented by the formula 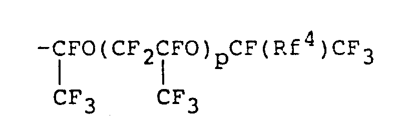
wherein p is an integer of from 0 to 5, and Rf⁴ is as defined above, or those represented by the formula:

-Ph-Rf⁵

wherein Ph is phenylene, and Rf⁵ is perfluoroalkyl having 5 to 15 carbon atoms.

More specific examples of monomer (4) include CH₂=CHCOOCH₂CH₂C₇F₁₅, CH₂=CHCOOCH₂C₂F₅, CH₂=C(CH₃)COOCH₂C₈F₁₆CF(CF₃)₂, CH₂=CHCOOCH₂CF(CF₃)OCF₂CF(CF₃)OC₃F₇, CH₂=C(CH₃)COOCH₂CF(CF₃)OC₃F₇, CH₂=CHCOOCH₂-CH₂N(CH₃)CO₂C₈F₁₇, CH₂=C(CH₃)COOCH₂CH(OH)CH₂C₉F₁₉, CH₂=CHCOOCH₂CH₂C₈F₁₉, CH₂=CHCOOCH₂CF(CF₃)OC₃F₇, CH₂=C(CH₃)COOCH₂CH₂C₇F₁₅ and the like.

Examples of copolymerizable ethylenically unsaturated monomers, other than the monomers (3) and (4), which can be incorporated into the fluorine-containing polymer in Composition B include acrylates and methacrylates having a functional group such as vinyl, hydroxyl, carboxyl, glycidyl, dialkylamino or trialkoxysilyl, CH₂=CH₂, 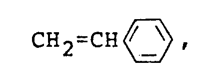
CH₂=CHCH₃, CH₂=CHCOOCH₃, CH₂=C(CH₃)COOCH₃, 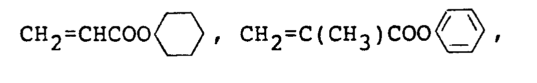
CH₂=C(CH₃)COOC₁₈H₃₇, CH₂=CHCOOC₁₂H₂₅, 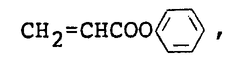
etc.

The fluorine-containing polymer to be used for Composition B is usually in the range of from 10,000 kmol/kg to 4,000,000 kmol/kg in number average molecular weight (as measured by gel permeation chromatography) and in the range of from 0.25 to 3.0, preferably from 0.5 to 2.0, in intrinsic viscosity [η] (as measured at a temperature of 35°C using m-xylene hexafluoride, methyl ethyl ketone, chloroform, 1,1,1-trichloromethane or like solvent). If the molecular weight is too small, the resulting coating has low strength and is liable to peel off the article treated, whereas if it is too great, the resulting composition is difficult to apply to articles owing to increased viscosity or low free-flowing properties.

The fluorine-containing polymer used in Composition B and comprising 10 to 90 mole % of an fluorine-containing acrylate (3), exhibits high adhesion to the article to be treated, forming a tough and flexible coating.

Composition B comprising a fluorine-containing copolymer containing 10 to 80 mole % of an acrylate (4) gives a coating excellent in water- and oil-repellent properties.

Other copolymerizable ethylenically unsaturated monomer, when incorporated into composotion B, acts to impart improved hardness to the coating of composition.

The fluorine-containing polymers of the present invention can be prepared by radical polymerization (e.g. solution, bulk or emulsion polymerization) or anionic polymerization.

Examples of solvents useful for solution polymerization are fluorine-containing solvents such as m-xylene hexafluoride and trichlorotrifluoroethane, hydrocarbon solvents such as ethyl acetate, methyl isobutyl ketone, acetone, toluene and xylene, etc. The polymer obtained by solution polymerization can be used in the form of a solution which is prepared by separating the polymer from the solvent and dissolving the polymer in a solvent after drying, or in the form of a solution which is prepared by merely diluting the resulting reaction mixture.

The polymer obtained by bulk polymerization is usable as dissolved in a solvent after drying.

Examples of polymerization initiators useful for solution polymerization and bulk polymerization are azo compounds such as azobisisobutyronitrile, peroxide compounds such as benzoyl peroxide and the like.

For solution polymerization and block polymerization, mercaptans such as laurylmercaptan and thiphenol are usable as chain transfer agents.

In either of these two processes, the polymerization temperature is preferably 30 to 100°C.

Before application to the article to be treated, the fluorine-containing polymer prepared by solution or bulk polymerization is dissolved in a dissolving solvent capable of thoroughly dissolving the polymer and further diluting the solution with a diluting solvent capble of dissolving the polymer without permitting the dissolved polymer to separate out. Like usual water- and oil-repellent agents, the resulting composition is applied to the article by dipping, brushing, spraying or otherwise. Preferably the concentration of the composition is 0.1 to 30 wt.% for brush coating or about 0.05 to about 2 wt.% for spray coating. The coating is dried at room temperature to 150°C.

Examples of useful dissolving solvents are fluorine-containing solvents such as m-xylene hexafluoride and trichlorotrifluoroethane, chlorine-containing solvents such as trichloroethane, etc. Examples of useful diluting solvents are chlorine-containing solvents such as tetrachloroethylene and trichloroethylene, ketone solvents such as acetone, ester solvents such as ethyl acetate, aromatic solvents such as toluene, etc. The dissolving solvent is usable also as the diluting solvent.

Nonionic compounds are desirable as emulsifiers for emulsion polymerization, while cationic emulsifiers are also usable.

The polymerization initiator to be used for emulsion polymerization is preferably a water-soluble compound. Examples of such compounds are azo compounds such as azobisisobutyroamidine hydrochloride, peroxide compounds such as succinic acid peroxide, etc. The emulsion polymerization temperature is preferably 30 to 100°C.

The fluorine-containing polymer prepared by emulsiton polymerization is usable as an aqueous composition. Usually, the emulsifier need not be removed from the reaction mixture. The aqueous water- and oil-repellent composition is usable in the same manner as above. Since the aqueous composition contains water, it is desirable to heat the coating thereof at 100 to 150°C for drying.

When the fluorine-containing acrylate of the formula (1) is to be singly polymerized, it is preferable to resort to anionic polymerization in view of the velocity of polymerization.

Examples of polymerization initiators usable for anionic polymerization are alkali metals, metallic hydrides, sodium amide, Grignard reagents, metal alkyl, pyridine and the like.

Examples of solvents usable for anionic polymerization are aromatic solvents such as toluene, ether solvents such as tetrahydrofuran, etc.

Anionic polymerization is conducted usually in a high vacuum of about 6.9 · 10⁻⁶ kPa (1 x 10⁻6 mm Hg) or in a dry inert gas atmosphere. The polymerization temperature is usually -100 to 70°C.

The polymer prepared by anionic polymerization can be applied to the article to be treated in the same manner as the one prepared by solution polymerization.

The water- and oil-repellent composition of the present invention is usable for giving water- and oil-repellent properties to various solid articles which must be resistant to abrasion, such as tents, sheet covers, umbrellas, raincoats, shoes, caps to hats, bags, jackets, jumpers, aprons, blazers, slacks, skirts, other garments, carpets, sofas, curtains, etc. Further, the composition of the invention is useful as an agent for preventing the adhesion of liquid polymers such as epoxy resin.

The water- and oil-repellent composition of the invention comprises a polymer which contains as a component thereof a specific fluorine-containing acrylate having a fluorine atom or fluorine-containing group at the α-position. The present composition is superior to conventional water- and oil-repellent compositions in adhesion to the article to be treated and has high durability against laundry.

### Example 1

Into a 200-c.c. glass ampule were placed 50 g of a monomer represented by the formula: CH₂=CF-COOCH₂-CF(CF₃)OC₃F₇ (hereinafter referred to as "αF6FO"), 4 g of glycidyl methacrylate (hereinafter referred to as "GMA"), 80 g of m-xylene hexafluoride (hereinafter referred to as "m-XHF") and 0.5 g of azobisisobutyronitrile, and the mixture was deaerated and purged with nitrogen repeatedly three times by the freeze-thaw method using methanol/dry ice. The ampule was then sealed off.

The ampule was immersed in a constant-temperature bath at 50°C for 30 hours.

The reaction mixture was thereafter placed into petroleum ether, and the resulting precipitate of fluorine-containing polymer was dried, giving 52 g of a fluorine-containing polymer.

The polymer had an intrinsic viscosity [η] of 1.12 as measured at a temperature of 35°C using m-XHF as a solvent.

Elementary analysis of the polymer revealed 30.2% of carbon and 54.4% of fluorine, indicating that the monomers had been polymerized almost entirely.

The polymer was dissolved in m-XHF (dissolving solvent) to a concentration of 30 wt.%, and the solution was diluted with trichlorotrifluoroethane (diluting solvent) to a concentration of 0.5 wt.%.

The dilution was applied to a synthetic leather comprising a polyurethane-coated nonwoven fabric, 3 mm in thickness, with a brush and then heated at 80°C for 30 minutes to prepare a specimen for testing adhesion.

The contact angle of water, as well as n-hexadecane, with respect to the specimen was measured immediately after the preparation and after flexing the specimen through 120 degrees 10,000 times. Table 2 shows the results.

### Examples 2-9 and Comparative Examples 1-3

Adhesion test specimens were prepared in the same manner as in Example 1 using the monomers, polymer dissolving solvent and diluting solvent listed in Table 1 for each polymer. Table 2 shows the results.

**Table 1-(1)**

| Example | Monomers and wt. ratio | [η] | Dissolving solvent | Diluting solvent |
|---|---|---|---|---|
| 2 | αF6FO/MX/GMA= 66/30/4 | 0.98 | m-XHF | Trichloroethane |
| 3 | αF6FO/MA/GMA= 50/46/4 | 0.90 | m-XHF | Trichloroethane |
| 4 | αF6FO/MA/GMA= 28/77/5 | 0.91 | m-XHF | Trichloroethane |
| 5 | αF17F/CMS= 70/30 | 0.58 | Trichlorotrifluoroethane | Trichlorotrifluoroethane |
| 6 | αF17F/GMA= 90/10 | 0.62 | m-XHF | Trichlorotrifluoroethane |
| 7 | αF17F/SA/17FA/ GMA=50/20/25/5 | 0.71 | m-XHF | Trichlorotrifluoroethane |
| 8 | αFi19F/MA/GMA 70/28/2 | 0.85 | m-XHF | Trichlorotrifluoroethane |
| 9 | αFi19F/EGMA/MA/ SMA=25/2/58/15 | 0.41 | Trichloroethane | Trichlorotrifluoroethane |

**Table 1-(2)**

| Comp. Ex. | Monomers and wt. ratio | [η] | Dissolving solvent | Diluting solvent |
|---|---|---|---|---|
| 1 | 17FMA/SA/GMA= 50/45/5 | 0.35 | Trichloroethane | Trichlorotrifluoroethane |
| 2 | 17FA/GMA= 90/10 | 0.32 | m-XHF | Trichlorotrifluoroethane |
| 3 | 19FA/MA/GMA= 65/30/5 | 0.28 | m-XHF | Trichlorotrifluoroethane |

In Table 1 and in the following, the monomer representing symbols represent the following.
- MA: : CH₂=CHCOOCH₃
- αF17F: : CH₂=CFCOOCH₂CH₂(CF₂CF₂)₃CF₂CF₃
- CMS: : CH₂=CH-Ph-CH₂Cl (wherein Ph is phenylene)
- SA: : CH₂=CHCOOC₁₈H₃₇
- 17FA: : CH₂=CHCOOCH₂CH₂C₈F₁₇
- αFi19F: : CH₂=CFCOOCH₂CH₂(CF₂CF₂)₃CF(CF₃)₂
- EGMA: : CH₂=C(CH₃)COO(CH₂CH₂O)₃COC(CH₃)=CH₂
- SMA: : CH₂=C(CH₃)COOC₁₈H₃₇
- 17FMA: : CH₂=C(CH₃)COOCH₂CH₂C₈F₁₇
- 19FA: : CH₂=CHCOOCH₂CH₂C₉F₁₉

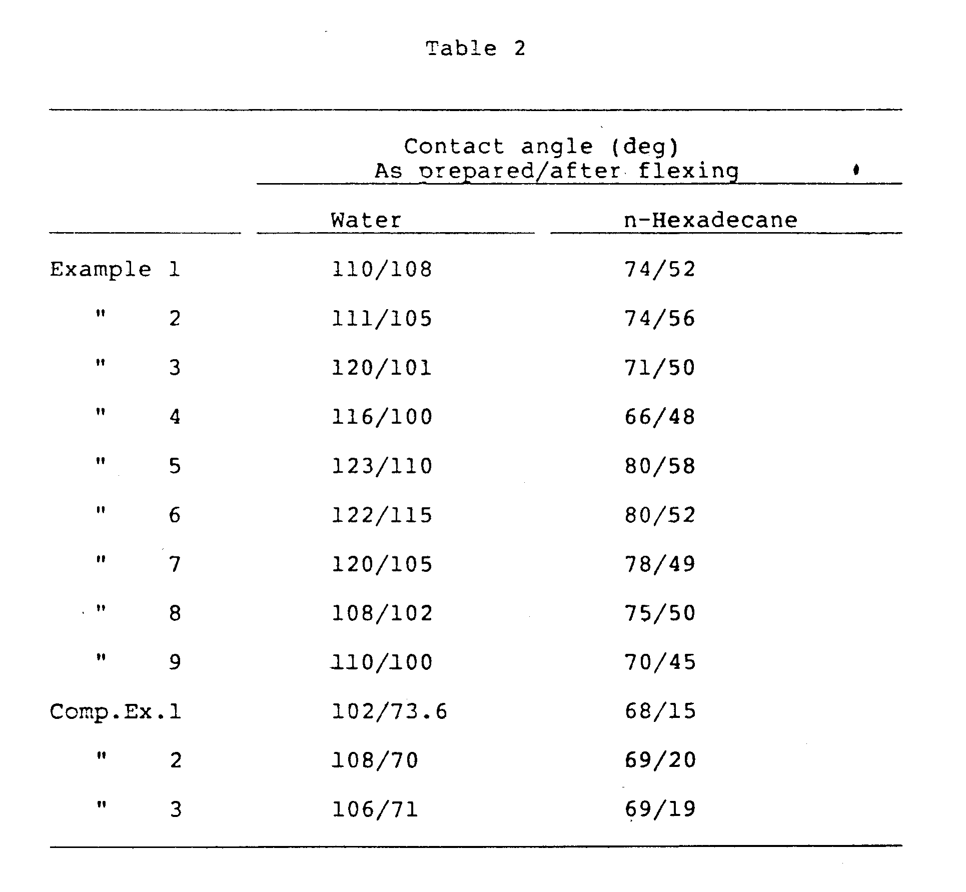

### Example 10

Water (1.9 liters), 400 g of acetone, 300 g of α F6FO, 19 g of MA, 1 g of EGMA and 40 g of an emulsifier (K220, product of Nippon Oils & Fats Co., Ltd.) were placed into a 3-liter four-necked flask equipped with a stirrer, thermometer, reflux condenser and dropping funnel and oxygen was removed from the system by introducing nitrogen thereinto. The flask was placed into a constant-temperature bath at 65°C. After the mixture was heated to a constant temperature, 0.1 liter of water having dissolved therein 1.6 g of azobisisobutyronitrile hydrochloride was added dropwise to the mixture to start polymerization.

Four hours later, a dispersion was obtained which contained 12 wt.% of solids. A portion of the dispersion was sampled and checked for monomer composition ratio and intrinsic viscosity [η]. The αF6FO/MA/EGMA ratio was 97.3/6/0.3 by weight (elementary analysis: 39.6% carbon and 55.0% fluorine) and the viscosity [η] was 0.68.

The dispersion was diluted with water to a concentration of 0.5 wt.% in a padding container. A polyester fabric was dipped in the padding bath, squeezed to remove the dilution, then dried at 80°C for 3 minutes and heat-treated at 150°C for 3 minutes to obtain a test specimen.

The specimen was tested for water repellency according to JIS L 1092 and for oil-repellency according to AATCC 118-1966T. The results were 100⁺ and No.6, respectively.

The same specimen as above was washed under the conditions of bath ratio of 1:50 and temperature of 40°C using a household electric washing machine and a detergent ("Super-Sabu", product of Kao Co., Ltd., Japan), then dried in air, lightly ironed at 140°C and subjected to the two tests againing, giving the results of 100⁺ and No.5, respectively.

### Comparative Example 4

Polymerization was conducted and a test specimen was prepared under the same conditions as in Example 10 with the exception of using 300 g of 17FA, 19 g of MMA and 1 g of EGMA as monomers. The polymer obtained was 0.38 in intrinsic viscosity [η].

Under the same conditions as in Example 10, the specimen was tested for water repellency and for oil repellency before and after laundry. The water repellency reduced from 100⁺ to 70, and the oil repellency from No.3 to No.0.

### Examples 11,12 and Comparative Example 5

Adhesion test specimens were prepared in the same manner as in Example 11 using the monomers, dissolving solvent and diluting solvent listed in Table 3 for each polymer. The specimens were similarly tested with the results given in Table 4.

**Table 3**

| | Monomers and wt. ratio | [η] | Dissolving solvent | Diluting solvent |
|---|---|---|---|---|
| Ex.11 | αFS/17FMA/GMA= 45/50/5 | 0.89 | m-XHF | CH₃CCl₃ |
| Ex.12 | αClS/17FA/GMA= 70/25/5 | 1.31 | m-XHF | CH₃CCl₃ |
| Comp. Ex. 5 | 19FMA/MA/GMA= 65/30/5 | 0.68 | m-XHF | CH₃CCl₃ |

In Table 3, the monomer representing symbols mean the following monomers.
- αFS: : CH₂=CFCOOC₁₈H₃₇
- 17FMA: : CH₂=C(CH₃)COOCH₂CH₂C₈F₁₇.
- 19FA: : CH₂=CHCOOCH₂CH₂(CF₂CF₂)₃CF(CF₃)₂
- 17FA: : CH₂=CHCOOCH₂CH₂C₈F₁₇
- 19FMA: : CH₂=C(CH₃)COOCH₂CH₂(CF₂CF₂)₃CF(CF₃)₂
- αClMe: : CH₂=CClCOOCH₃

**Table 4**

| | Contact angle (deg) As prepared/after flexing | |
|---|---|---|
| | Water | n-Hexadecane |
| Example 14 | 115/100 | 79/55 |
| Example 15 | 112/98 | 65/44 |
| Comp.Ex.5 | 106/71 | 69/19 |

## Claims

1. A fluorine-containing water- and oil-repellent composition comprising a fluorine-containing polymer which comprises at least 10 mole % of a fluorine-containing acrylate represented by the formula: 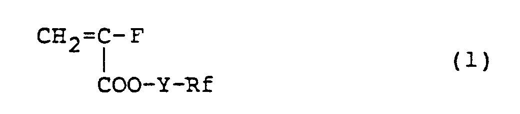 wherein Y is alkylene having 1 to 3 carbon atoms, -CH₂CH₂N(R)SO₂- group wherein R is alkyl having 1 to 4 cabron atoms or -CH₂CH(OZ)CH₂- wherein Z is a hydrogen atom or acetyl, and Rf is fluoroalkyl having 3 to 21 carbon atoms, or fluoroalkyl having 3 to 21 carbon atoms and 1 to 10 oxygen atoms in its carbon chain wherein no two oxygen atoms are present adjacent to each other.

2. A composition as defined in claim 1 wherein the group Rf in the fluorine-containing acrylate represented by the formula (1) is a group represented by the formula:
-((CF₂CF₂)ₘ(O)ₙ)_{q}CF(Rf¹)CF₃
wherein m is an integer of from 1 to 5, n is 0 or 1, q is an integer of from 1 to 5, and Rf¹ is a fluorine atom or trifluoromethyl, those represented by the formula 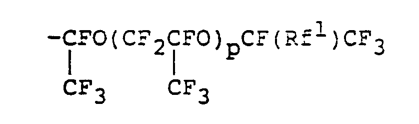 wherein p is an integer of from 0 to 5, and Rf¹ is as defined above, or those represented by the formula:
-Ph-Rf²
wherein Ph is phenylene, and Rf² is perfluoroalkyl having 5 to 15 carbon atoms.

3. A composition as defined in claim 1 which comprises:
(i)10 to 90 mole % of the fluorine-containing acrylate represented by the formula (1), and
(ii)90 to 10 mole % of an ethylenically unsaturated monomer.

4. A composition as defined in claim 3 wherein the ethylenically unsaturated monomer is at least one of a monomer represented by the formula: 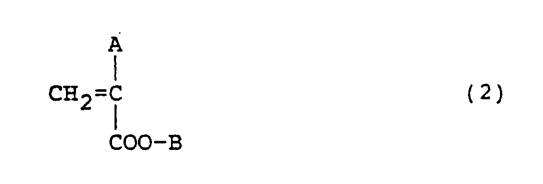 wherein A is a hydrogen atom, chlorine atom or methyl and B is alkyl having 1 to 20 carbon atoms, alicyclic group having 6 to 8 carbon atoms or fluoroalkyl having 1 to 10 carbon atoms; ethylene, propylene, styrene; and (metha)acrylate having vinyl, hydroxyl, carboxyl, glycidyl, dialkylamino or trialkoxysilyl.

5. A composition as defined in claim 1 which is in the form of a solution.

6. A composition as defined in claim 1 which is in the form of an aqueous dispersion.

7. A fluorine-containing water- and oil-repellent composition comprising a fluorine-containing polymer which comprises
(i) 10 to 90 mole % of a monomer represented by the formula: 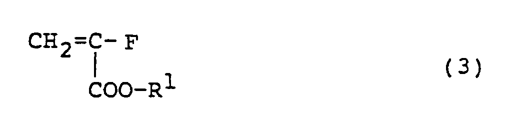 wherein R¹ is alkyl having 1 to 20 carbon atoms, alicyclic group, aromatic group or aralkyl;
(ii) 10 to 80 mole % of a monomer represented by the formula: 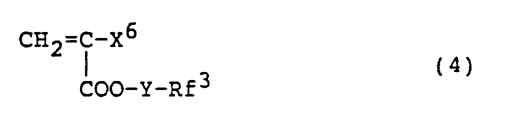 wherein X⁶ is a hydrogen atom or methyl, Y is alkylene having 1 to 3 carbon atoms, -CH₂CH₂N(R)SO₂- group wherein R is alkyl having 1 to 4 carbon atoms or -CH₂CH(OZ)CH₂- wherein Z is a hydrogen atom or acetyl, and Rf³ is fluoroalkyl having 3 to 21 carbon atoms, or fluoroalkyl having 3 to 21 carbon atoms and 1 to 10 oxygen atoms in its carbon chain wherein no two oxygen atoms are present adjacent to each other; and
(iii) 0 to 50 mole % of other copolymerizable ethylenically unsaturated monomer,
the combined amount of the monomers (i) to (iii) being 100 mole %.

8. A composition as defined in claim 7 wherein the group Rf³ in the fluorine-containing acrylate represented by the formula (4) is a group represented by the formula:
-((CF₂CF₂)ₘ(O)n)_{q}CF(Rf⁴)CF₃
wherein m is an integer of from 1 to 5, n is 0 or 1, q is an integer of from 1 to 5, and Rf⁴ is a fluorine atom or trifluoromethyl, those represented by the formula 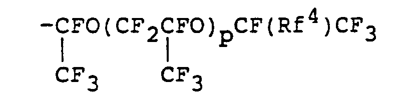 wherein p is an integer of from 0 to 5, and Rf⁴ is as defined above, or those represented by the formula:
-Ph-Rf⁵
wherein Ph is phenylene, and Rf⁵ is perfluoroalkyl having 5 to 15 carbon atoms.

9. A composition as defined in claim 7 which is in the form of a solution.

10. A composition as defined in claim 7 which is in the form of an aqueous dispersion.

## Patentansprüche

1. Eine Fluor enthaltende wasser- und ölabweisende Zusammensetzung, umfassend ein fluorhaltiges Polymer, das wenigstens 10 Mol-% eines fluorhaltigen Akrylats umfaßt, das durch die Formel 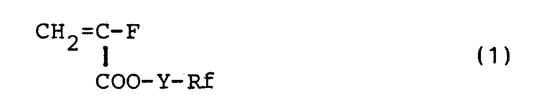 dargestellt wird, worin Y Alkylen mit 1 bis 3 Kohlenstoffatomen, eine -CH₂CH₂N(R)SO₂-Gruppe, in der R Alkyl mit 1 bis 4 Kohlenstoffatomen ist, oder -CH₂CH(OZ)CH₂-, worin Z ein Wasserstoffatom oder Azetyl ist, ist und Rf Fluoralkyl mit 3 bis 21 Kohlenstoffatomen oder Fluoralkyl mit 3 bis 21 Kohlenstoffatomen und 1 bis 10 Sauerstoffatomen in seiner Kohlenstoffkette, worin keine zwei Sauerstoffatome einander benachbart vorhanden sind, ist.

2. Eine Zusammensetzung nach Anspruch 1, bei der die Gruppe Rf in dem fluorhaltigen Akrylat, das durch die Formel (1) dargestellt wird, eine Gruppe, die durch die Formel:
-((CF₂CF₂)ₘ(O)ₙ)_{q}CF(Rf¹)CF₃
dargestellt wird, worin m eine ganze Zahl von 1 bis 5 ist, n 0 oder 1 ist, q eine ganze Zahl von 1 bis 5 ist und Rf¹ ein Fluoratom oder Trifluormethyl ist, solche, die durch die Formel 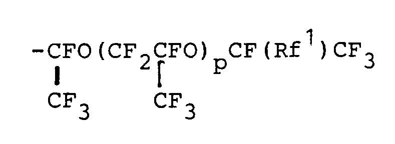 dargestellt werden, worin p eine ganze Zahl von 0 bis 5 und Rf¹ so wie vorstehend definiert ist, oder solche, die durch die Formel:
-Ph-Rf²
dargestellt werden, worin Ph Phenylen ist und Rf² Perfluoralkyl mit 5 bis 15 Kohlenstoffatomen ist, ist.

3. Eine Zusammensetzung nach Anspruch 1, die:
(i) 10 bis 90 Mol-% des fluorhaltigen Akrylats, das durch die Formel (1) dargestellt wird, und
(ii) 90 bis 10 Mol-% eines äthylenisch ungesättigten Monomeren umfaßt.

4. Eine Zusammensetzung nach Anspruch 3, bei der das äthylenisch ungesättigte Monomer wenigstens eines der Monomere ist, die durch die Formel: 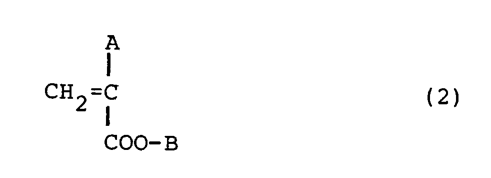 dargestellt werden, worin A ein Wasserstoffatom, Chloratom oder Methyl ist und B Alkyl mit 1 bis 20 Kohlenstoffatomen, eine alizyklische Gruppe mit 6 bis 8 Kohlenstoffatomen oder Fluoralkyl mit 1 bis 10 Kohlenstoffatomen; Äthylen, Propylen, Styrol und (Meth)akrylat mit Vinyl, Hydroxyl, Karboxyl, Glyzidil, Dialkylamino oder Trialkoxysilyl ist.

5. Eine Zusammensetzung nach Anspruch 1, die in der Form einer Lösung vorliegt.

6. Eine Zusammensetzung nach Anspruch 1, die in der Form einer wässrigen Dispersion vorliegt.

7. Eine Fluor enthaltende wasser- und ölabweisende Zusammensetzung, umfassend ein fluorhaltiges Polymer, das
(i) 10 bis 90 Mol-% eines Monomeren, das durch die Formel 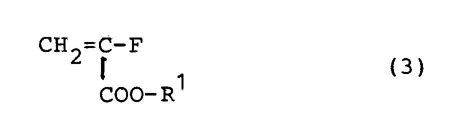 dargestellt wird, worin R¹ Alkyl mit 1 bis 20 Kohlenstoffatomen, eine alizyklische Gruppe, aromatische Gruppe oder Aralkyl ist;
(ii) 10 bis 80 Mol-% eines Monomeren, das durch die Formel 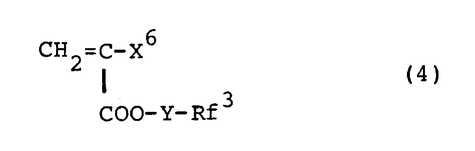 dargestellt wird, worin X⁶ ein Wasserstoffatom oder Methyl ist, Y Alkylen mit 1 bis 3 Kohlenstoffatomen, -CH₂CH₂N(R)SO₂-Gruppe, in der R Alkyl mit 1 bis 4 Kohlenstoffatomen ist, oder -CH₂CH(OZ)CH₂-, worin Z ein Wasserstoffatom oder Azetyl ist, ist und Rf³ Fluoralkyl mit 3 bis 21 Kohlenstoffatomen oder Fluoralkyl mit 3 bis 21 Kohlenstoffatomen und 1 bis 10 Sauerstoffatomen in seiner Kohlenstoffkette, wobei keine zwei Sauerstoffatome einander benachbart vorhanden sind, ist; und
(iii) 0 bis 50 Mol-% anderes copolymerisierbares äthylenisch ungesättigtes Monomer umfaßt,
wobei die kombinierte Menge der Monomere (i) bis (iii) 100 Mol-% ist.

8. Eine Zusammensetzung nach Anspruch 7, bei der die Gruppe Rf³ in dem fluorhaltigen Akrylat, das durch die Formel (4) dargestellt wird, eine Gruppe, die durch die Formel:
-((CF₂CF₂)ₘ(O)ₙ)_{q}CF(Rf⁴)CF₃
dargestellt wird, in der m eine ganze Zahl von 1 bis 5 ist, n 0 oder 1 ist, q eine ganze Zahl von 1 bis 5 ist und Rf⁴ ein Fluoratom oder Trifluormethyl ist, solche, die durch die Formel 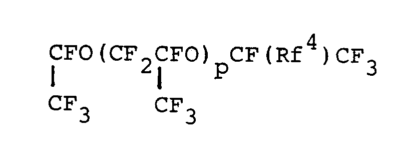 dargestellt werden, worin p eine ganze Zahl von 0 bis 5 ist und Rf⁴ so wie oben definiert ist, oder solche, die durch die Formel
-Ph-Rf⁵
dargestellt werden, worin Ph Phenylen ist und Rf⁵ Perfluoralkyl mit 5 bis 15 Kohlenstoffatomen ist, ist.

9. Eine Zusammensetzung nach Anspruch 7, die in der Form einer Lösung vorliegt.

10. Eine Zusammensetzung nach Anspruch 7, die in der Form einer wässrigen Dispersion vorliegt.

## Revendications

1. Composition répulsive à l'eau et à l'huile contenant du fluor, comprenant un polymère contenant du fluor qui comprend au moins 10% en moles d'un acrylate contenant du fluor représenté par la formule : 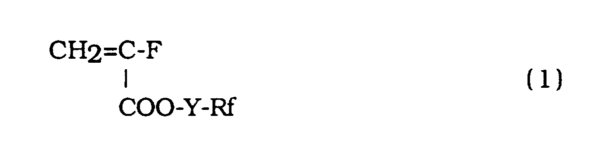 dans laquelle Y est un groupe alkylène ayant 1 à 3 atomes de carbone, un groupe -CH₂CH₂N(R)SO₂- dans lequel R est un groupe alkyle ayant 1 à 4 atomes de carbone ou -CH₂CH(OZ)CH₂-dans lequel Z est un atome d'hydrogène ou un groupe acétyle, et Rf est un groupe fluoroalkyle ayant 3 à 21 atomes de carbone, ou un groupe fluoroalkyle ayant 3 à 21 atomes de carbone et 1 à 10 atomes d'oxygène dans sa chaîne carbonée qui ne comprend pas deux atomes d'oxgène l'un à côté de l'autre.

2. Composition suivant la revendication 1, dans laquelle le groupe Rf dans le groupe acrylate contenant du fluor représenté par la formule (1), est un groupe représenté par la formule :
-[(CF₂CF₂)ₘ(O)ₙ]_{q}CF(Rf¹)CF₃
dans laquelle m est un entier de 1 à 5, n est 0 ou 1, q est un entier de 1 à 5 et Rf¹ est un atome de fluor ou un groupe trifluorométhyle,
un groupe représenté par la formule : 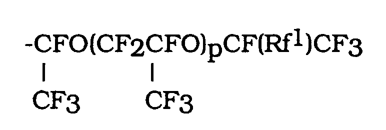 dans laquelle p est un entier de 0 à 5, et Rf¹ est tel que défini plus haut, ou
un groupe représenté par la formule :
-Ph-Rf²
dans laquelle Ph est un groupe phénylène et Rf² est un groupe perfluoroalkyle ayant 5 à 15 atomes de carbone.

3. Composition suivant la revendication 1, qui comprend :
(i) 10 à 90% en moles de l'acrylate contenant du fluor représenté par la formule (1), et
(ii) 90 à 10% en moles d'un monomère insaturé éthyléniquement.

4. Composition suivant la revendication 3, dans laqulle le monomère insaturé éthyléniquement est au moins un monomère parmi un monomère représenté par la formule : 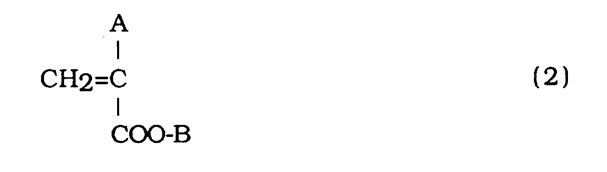 dans laquelle A est un atome d'hydrogène, de chlore ou un groupe méthyle et B est un groupe alkyle ayant 1 à 20 atomes de carbone, un groupe alicyclique ayant 6 à 8 atomes de carbone ou fluoroalkyle ayant 1 à 10 atomes de carbone; l'éthylène, le propylène, le styrène; et un (méth)acrylate ayant un groupe vinyle, hydroxy, carboxy, glycidyle, dialkylamino ou trialcoxysilyle.

5. Composition suivant la revendication 1, qui est sous la forme d'une solution.

6. Composition suivant la revendication 1, qui est sous la forme d'une dispersion aqueuse.

7. Composition répulsive à l'eau et à l'huile contenant du fluor comprenant un polymère contenant du fluor, qui comprend
(i) 10% à 90% en moles d'un monomère représenté par la formule : 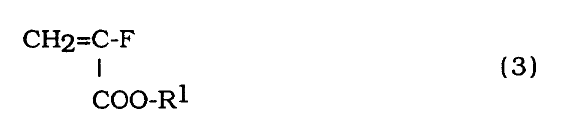 dans laquelle R¹ est un groupe alkyle ayant 1 à 20 atomes de carbone, un groupe alicyclique, aromatique ou aralkyle;
(ii) 10 à 80% en moles d'un monomère représenté par la formule : 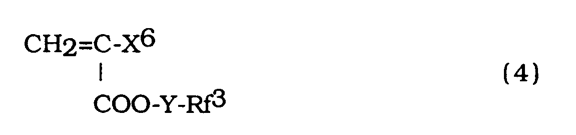 dans laquelle X⁶ est un atome d'hydrogène ou un groupe méthyle, Y est un groupe alkylène ayant 1 à 3 atomes de carbone, un groupe -CH₂CH₂N(R)SO₂- dans lequel R est un groupe alkyle ayant 1 à 4 atomes de carbone ou -CH₂CH(OZ)CH₂- dans lequel Z est un atome d'hydrogène ou un groupe acétyle, et Rf³ est un groupe fluoroalkyle ayant 3 à 21 atomes de carbone, ou un groupe fluoroalkyle ayant 3 à 21 atomes de carbone et 1 à 10 atomes d'oxygène dans sa chaîne carbonée qui ne comprend pas deux atomes d'oxygène l'un à côté de l'autre; et
(iii) 0 à 50% en moles d'un autre monomère copolymérisable insaturé éthyléniquement,
la quantité combinée des monomères (i) à (iii) étant de 100% en moles.

8. Composition suivant la revendication 7, dans laquelle le groupe Rf³ dans le groupe acrylate contenant du fluor représenté par la formule (4), est un groupe représenté par la formule :
-[(CF₂CF₂)ₘ(O)ₙ]_{q}CF(Rf⁴)CF₃
dans laquelle m est un entier de 1 à 5, n est 0 ou 1, q est un entier de 1 à 5 et Rf⁴ est un atome de fluor ou un groupe trifluorométhyle,
un groupe représenté par la formule : 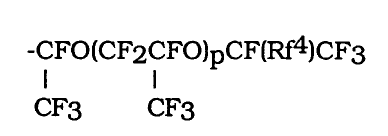 dans laquelle p est un entier de 0 à 5, et Rf⁴ est tel que défini plus haut, ou
un groupe représenté par la formule :
-Ph-Rf⁵
dans laquelle Ph est un groupe phénylène et Rf⁵ est un groupe perfluoroalkyle ayant 5 à 15 atomes de carbone.

9. Composition suivant la revendication 7, qui est sous la forme d'une solution.

10. Composition suivant la revendication 7, qui est sous la forme d'une dispersion aqueuse.
